# EUROPEAN PATENT SPECIFICATION

(11) **EP 4 422 067 B1**
(45) Date of publication and mention of the grant of the patent: **04.03.2026**
(21) Application number: 24169344.9
(22) Date of filing: 10.09.2021
(51) Int. Cl.: H02S 20/26, H02S 20/30

(54) **A PHOTOVOLTAIC LAMELLA, ITS PRODUCTION METHOD AND A BRISE SOLEIL CONTAINING SAID PHOTOVOLTAIC LAMELLA**
FOTOVOLTAISCHE LAMELLE, HERSTELLUNGSVERFAHREN DAFÜR UND GRISESOHLE MIT DER FOTOVOLTAISCHEN LAMELLE
LAMELLE PHOTOVOLTAÏQUE, SON PROCÉDÉ DE PRODUCTION ET BRISE-SOLEIL CONTENANT LADITE LAMELLE PHOTOVOLTAÏQUE

(30) Priority: 10.09.2020 PL 43526020
(43) Date of publication of application: 28.08.2024
(62) Divisional of application: 21799096.9
(73) Proprietor: Saule Spolka Akcyjna, 54-427 Wroclaw (PL)
(72) Inventor: BURSA, Bartosz, 64-300 Nowy Tomysl (PL); KUPCZUNAS, Artur, 62-800 Kalisz (PL); GERVÁSIO, Joao Paulo, 50-201 Wroclaw (PL)
(74) Representative: Kancelaria Eupatent.pl Sp. z o.o.

(56) References cited:
- WO-A2-2011/070501
- DE-A1- 102008 014 561
- DE-U1- 202004 014 182
- KR-B1- 101 958 432
- US-A1- 2018 195 766
- US-A1- 2019 259 892
- US-B1- 6 384 314

## Description

The subject of the invention is a photovoltaic lamella according to claim 1, its production method as defined in claim 12 and a brise soleil according to claim 15 containing at least one said photovoltaic lamella, intended for solar protection of a building and premises located therein, electricity generation and improvement of the power efficiency of a building.

Photovoltaic brise soleil systems combine the solar protection functionality with generation of electricity used not only to power the drive of the system, but also to power other equipment inside the building. Photovoltaic brise soleil systems were initially intended for office buildings and currently, thanks to their size scaling, they may also be used for houses and apartment blocks.

Brise soleil systems containing aluminium profiles dispersing sunlight reaching windows and glass facades are often used on the exteriors of office buildings as solar protection. Such shields, also known as large scale roller blinds, are an ideal carrier substrate for photovoltaic cells. Photovoltaic modules with sizes adapted to the given project are used instead of full aluminium profiles.

Such solutions are even more frequently encountered because of the current regulation dictating designing public spaces as zero-energy spaces. Projects executed by ML System using photovoltaic modules with sizes tailored individually to each of the sites, with silicon cells applied on glass and the cells being based on an aluminium frame are an example of such systems.

Large scale roller blinds are generally intended for public buildings and spaces. The large size of the lamellae and the inability of pulling them up makes such shields difficult to use in the case of family homes. A solution proposed by Yawal is close to this particular idea. Photovoltaic brise soleil systems by Yawal Sun Control are available in fixed, rotary and rotary-lifted versions. An appropriate electric drive enables automatic adjustments of moving systems and their integration with the central management system of the building.

However, the product introduced on the market this year by the Ukrainian company SolarGaps, resembles traditional roller blinds much more closely. It is advertised as the first ever roller blind keeping rooms cool, while automatically tracking the Sun and generating electricity. The smart roller blinds adjust such that they receive as much sunlight as possible. They may also be controlled manually, using an Android or an iOS application. This enables i.e. their working schedule to be created and monitoring the quantity of the generated power.

Photovoltaic cells applied onto aluminium lamellae of the roller blinds are characterised by significant efficiency. Thanks to this efficiency, they may offer an alternative or a supplement to the photovoltaic panels installed on a roof. One square metre of a roller blind installed outdoors can generate 100 Watts of energy with good sunlight availability. This energy may be used to charge batteries or, once transformed into alternating current, to power household appliances (https://forumbranzowe.com/zaluzje-produkujace-prad/).

There are many known designs of photovoltaic brise soleil systems. For example, in the Chinese patent application CN 111395931A, a solar shield and a method of its control were disclosed, wherein the device contains a device frame, an integrated anti-solar panel, a drive motor, a screwtype driving mechanism and a controller. A controller is connected to this device, which, depending on the shade, lighting, fire alarm and other situations occurring in real time, as well as on the basis of PV energy generation optimises the panel position in real time on the basis of said conditions, such as shade, daylight, ventilation, heat retention or a fire alarm, thus improving the efficiency of the device and the user comfort.

The Korean patent publication KR102078548 B1 discloses a roller blind placed within a frame in order to block the light entering inside through a window, and more precisely, a self-driven roller blind with a modular shading unit, which uses sunlight to generate electricity. The roller blind contains a set of shading vanes with multiple shading apertures spaced out evenly. The shading apertures include: an assembly panel provided with an assembly rail formed in the external wall; one or multiple solar panels inserted into the assembly rail formed on the installed assembly pane; and a conducting clamping element formed on the assembly wall of the assembly rail in order to provide contact between the output terminal of each solar panel inserted into the assembly rail for the purpose of serial connection of individual solar panels.

Other solutions are disclosed in the patent publications DE 10 2008 014561 A1, DE1020118004538A1, KR20180131748A,

EP3633133 A1, EP3633134 A1, US2018/0195766 A1 and KR20180131751 A.

The European patent application EP3441555 A1 discloses a window roller blind of the tracking type, using solar panels. This device includes numerous solar shields, separated at a pre-determined distance and regulating sunlight transmittance; solar modules respectively attached to multiple solar shields and generating power using sunlight; a controller connected to multiple solar shields in order to adjust the tilt angle of each of the solar shields and the distance between individual shields; as well as a controller setting one of the operating modes of energy generation mode, privacy protection mode and lighting mode, as required by the user, and which controls the tilt angle of each individual solar shield and the distance between individual solar shields, according to the pre- set operating mode, the seasons and time and the angle at which Sun is present in the sky.

In this device, the solar shields are divided into the first area, where the solar module is installed, and the second area, where the solar module is not connected. The first area and the second area rotate separately against the rotation axis formed between the first areas.

The international patent application WO18049478 discloses a modular photovoltaic device with roller blinds and a rectangular frame, containing multiple photovoltaic panels of the roller blind type connected in parallel within frames, electric connectors connecting each of the roller blind panels and a skeleton enabling panel rotation within the frame. Each of the panels contains: a transparent housing; multiple top photovoltaic panels facing upwards, operationally facing the top surface; multiple bottom, facing downwards, photovoltaic cells facing the bottom surface; and a reflector placed between the bottom photovoltaic cells and the transparent housing. Each of the multiple top and bottom voltaic cells occupies a surface area smaller than voltaic panels, such that light may be transmitted through the outer transparent panel to the photovoltaic panel located below, such that light captured by the device is amplified thanks to the ability of the bottom photovoltaic cells to capture reflected light.

None of the devices described above discloses a photovoltaic lamella with a structure similar to that disclosed in this invention.

Example connections between photovoltaic modules are disclosed in patent applications EP3652790 A1 and WO07053306 A2, however, none of the described solutions discloses parallel connections with a design similar to that disclosed in this invention.

Despite the intensive development in this field of technology applicable to photovoltaic brise soleil systems, a large demand for development of novel devices enabling even more efficient use of sunlight, as well as other light types, for example light from inside a building, exists. Solutions, in which damage to one photovoltaic module does not force the user to replace the entire device or the damaged lamella immediately because of the sudden drop in energy generation efficiency, are also investigated.

The objective of this invention was to develop a design for a photovoltaic lamella for use in novel, photovoltaic brise soleil systems which are not characterised by the disadvantages outlined above.

This objective has been fulfilled by the disclosed invention.

Thus, the subject of this invention is a photovoltaic lamella formed as a longitudinal, closed profile or a closed panel, containing at least two photovoltaic modules on one side, wherein electric conductors from the photovoltaic module are placed inside the lamella, characterised in that it includes several layers on at least one side, placed atop one another, such that
- an adhesive layer is applied onto the surface of material the lamella is made of, wherein at least one through opening passing through the adhesive layer and at least partially through the material is present in this material and in the adhesive layer, which allows the electric conductors to be routed to busbars;
- a photovoltaic layer comprised of at least two photovoltaic modules is present on the adhesive layer;
- the photovoltaic layer is covered with another adhesive layer attaching a transparent protective layer to the photovoltaic layer, wherein the adhesive layer may contain colour-imparting pigments,
wherein the photovoltaic layer contains:
- at least two photovoltaic modules located next to each other and laminated,
- two adjacent busbars running between the photovoltaic layer and the adhesive layer.

The photovoltaic layer in the photovoltaic lamella preferably includes;
- at least two photovoltaic modules placed next to each other, connected mechanically and electrically using a busbar and laminated,
- two other adjacent busbars generally perpendicular to the busbars running between the photovoltaic layer and the adhesive layer,

wherein positive outputs of the modules are connected electrically to the first busbar and negative outputs of the modules are connected electrically to the second busbar,
while electric conductors are connected to busbars, preferably at the junctions of any of the busbars with any other busbar.

The longitudinal, closed profile is preferably hollow.

The longitudinal, closed profile preferably has a rectangular, oval cross-section or a cross-section in the form of two elongated C letters connected at their ends (a lens cross-section).

The longitudinal panel is preferably flat or convex.

The photovoltaic lamella is preferably made of materials, such as aluminium, plastic, steel, glass, ceramics or wood.

The adhesive layers preferably contain adhesive, such as melting adhesive, pressure-sensitive adhesive (PSA), a resin or a double-sided adhesive tape.

The photovoltaic layer preferably contains photovoltaic modules made using silicon, perovskite, organic OPV or CIGS (copper, indium, gallium and selenide) technology.

The photovoltaic lamella according to the invention preferably contains two photovoltaic layers at both sides, which may contain photovoltaic modules made using different photovoltaic technologies. One of the photovoltaic layers is preferably characterised by a better ability to collect sunlight, while the other photovoltaic layer is characterised by a better efficiency of dispersed light collection.

Only one opening passing through the adhesive layer and at least partially through the material, enabling electric conductors to be routed to the busbars, is preferably present in the material of the lamella and in the adhesive layer.

Preferably, at least two photovoltaic modules are placed next to each other, connected mechanically and electrically, in parallel, using a busbar and laminated.

The photovoltaic lamella according to the invention preferably has a depression in the profile, enabling photovoltaic modules to be placed therein, such that the total module thickness is generally equal to the depth of the depression.

The photovoltaic lamella according to the invention is preferably and additionally filled inside with an insulating material.

Preferably, at least two photovoltaic modules operate independently.

The photovoltaic lamella according to the invention preferably and additionally contains a reflecting element in the adhesive layer or the reflecting element is formed as a reflecting layer applied onto the surface of the material the lamella is made of.

The top adhesive layer and/or the bottom adhesive layer additionally contains a pigment.

The subject of the invention also includes a production method of the disclosed photovoltaic lamella, which includes the following stages, in which
a) the photovoltaic layer is produced in the following stages, in which
   - at least two photovoltaic modules are placed next to each other and subsequently laminated,
   - two neighbouring busbars are placed on one side of the laminated photovoltaic modules, the busbars extend between the photovoltaic layer and the adhesive layer in the photovoltaic lamella,
b) the adhesive layer is applied onto at least one side of the lamella, onto the surface of the material the photovoltaic lamella is made of, in the shape of a longitudinal, closed profile or a longitudinal panel, and subsequently at least one through opening is made through the adhesive layer and at least partially through material, which enables routing electric conductors to the busbars;
c) a photovoltaic layer comprised of at least two photovoltaic modules is applied onto the adhesive layer;
d) the photovoltaic layer is covered with another adhesive layer and a transparent protective layer is applied onto the photovoltaic layer, by attaching the transparent protective layer to the adhesive layer; wherein the adhesive layer may contain colour-imparting pigments;
wherein stages a) and b) may be performed in any order, while stages c) and d) may be performed in any order, but only after stage a).

The method preferably includes the following stages, in which
a) the photovoltaic layer is produced in the following stages, in which
   - at least two photovoltaic modules are placed next to each other and connected mechanically and electrically, preferably using the same poles, using a busbar and are subsequently laminated,
   - two neighbouring busbars, generally perpendicular to the busbars which extend between the photovoltaic layer and the adhesive layer in the photovoltaic lamella, are placed on one side of the connected and laminated photovoltaic modules,

   wherein positive outputs of the modules are connected electrically to the first busbar and negative outputs of the modules are connected electrically to the second busbar,
   while electric conductors are connected to busbars, preferably at the junctions of any of the busbars with any other busbar;
b) the adhesive layer is applied onto at least one side of the lamella, which is in the shape of a longitudinal, closed profile or a longitudinal panel, onto the surface of the material the photovoltaic lamella is made of, and subsequently at least one through opening is made through the adhesive layer and at least partially through material, which enables routing electric conductors to the busbars;
c) a photovoltaic layer comprised of at least two connected, preferably in parallel, photovoltaic modules is applied onto the adhesive layer;
d) the photovoltaic layer is covered with another adhesive layer and a transparent protective layer is applied onto the photovoltaic layer, by attaching it to the adhesive layer; wherein the adhesive layer may contain colour-imparting pigments;
wherein stages a) and b) may be performed in any order, while stages c) and d) may be performed in any order, but only after stage a).

Preferably, only one opening passing through the adhesive layer and at least partially through the material, enabling electric conductors to be routed to the busbars, is present in the material of the lamella and in the adhesive layer during stage b).

Preferably, the adhesive layer and the photovoltaic layer are applied onto both sides of the lamella during stages b) and c), wherein the photovoltaic layers on both sides of the lamella may be different, with a photovoltaic layer on one side and a photovoltaic layer on the other side.

Two different photovoltaic layers are preferably produced in stage a), using photovoltaic modules made using various photovoltaic technologies, such as silicon, perovskite, organic OPV or CIGS (copper, indium, gallium and selenide) technology.

The subject of the invention also includes a photovoltaic brise soleil, containing:
- a frame,
- at least one photovoltaic lamella attached vertically or horizontally onto the frame,
- means moving the at least one photovoltaic lamella,
- controlling means,
   characterised in that the photovoltaic lamella has the shape of a longitudinal, closed profile or a closed panel, and contains at least two photovoltaic modules on one side, wherein electric conductors from the photovoltaic module are placed inside the lamella, wherein the photovoltaic lamella on at least one side includes several layers, placed atop one another, such that
- an adhesive layer is applied onto the surface of material the lamella is made of, wherein at least one through opening passing through the adhesive layer and at least partially through the material is present in the material and in the adhesive layer, which allows the electric conductors to be routed to busbars;
- a photovoltaic layer comprised of at least two photovoltaic modules is present on the adhesive layer;
- the photovoltaic layer is covered with another adhesive layer attaching a transparent protective layer to the photovoltaic layer, wherein the adhesive layer may contain colour-imparting pigments;
wherein the photovoltaic layer contains:
- at least two photovoltaic modules located next to each other and laminated,
- two adjacent busbars running between the photovoltaic layer and the adhesive layer.

The photovoltaic lamella preferably contains at least two connected photovoltaic modules on one side, preferably connected in parallel, which are placed next to each other within the photovoltaic layer, connected mechanically and electrically, preferably via the same poles, using a busbar and laminated,
- two other adjacent busbars generally perpendicular to the busbars running between the photovoltaic layer and the adhesive layer,

wherein positive outputs of the modules are connected electrically to the first busbar and negative outputs of the modules are connected electrically to the second busbar,
while electric conductors are connected to busbars, preferably at the junctions of any of the busbars with any other busbar.

The longitudinal, closed profile is preferably hollow.

The longitudinal, closed profile preferably has a rectangular, oval cross-section or a cross-section in the form of two elongated C letters connected at their ends (a lens cross-section).

The longitudinal panel is preferably flat or convex.

The photovoltaic lamella is preferably made of materials, such as aluminium, plastic, steel, glass, ceramics or wood.

The adhesive layers preferably contain adhesive, such as melting adhesive, pressure-sensitive adhesive (PSA), a resin or a double-sided adhesive tape.

The photovoltaic layer preferably contains photovoltaic modules made using silicon, perovskite, organic OPV or CIGS (copper, indium, gallium and selenide) technology.

The photovoltaic lamella preferably contains two photovoltaic layers on both its sides, wherein the photovoltaic layers present on both sides of the lamella may contain photovoltaic modules made using different photovoltaic technologies.

One of the photovoltaic layers is preferably characterised by a better ability to collect sunlight, while the other photovoltaic layer is characterised by a better efficiency of dispersed light collection.

Only one opening passing through the adhesive layer and at least partially through the material, enabling electric conductors to be routed to the busbars, is preferably present in the material of the lamella and in the adhesive layer.

The drive means and the controlling means are preferably supplied using electricity obtained from photovoltaic modules.

The photovoltaic brise soleil according to the invention may be preferably and additionally equipped with communication interfaces, such as a GPS receiver, a GSM receiver/transmitter, Bluetooth and/or Wi-Fi, Zigbee, LoRaWAN.

Preferably, at least two photovoltaic modules are placed next to each other within the lamella, connected mechanically and electrically, in parallel, using a busbar and laminated.

The lamella has a depression in the profile, enabling photovoltaic modules to be placed therein, such that the total module thickness is generally equal to the depth of the depression.

The lamella is preferably and additionally filled inside with an insulating material.

Preferably, at least two photovoltaic modules operate independently inside the lamella.

The lamella additionally contains a reflecting element in the adhesive layer or the reflective element is formed as a reflecting layer applied onto the surface of the material the lamella is made of.

The top adhesive layer and/or the bottom adhesive layer of the lamella additionally contains a pigment.

This disclosure is intended to provide a system of solar panels integrated with brise soleil systems. The solar shields are made of several lamellae, which may be attached or adjusted manually or automatically in order to control sunlight intensity inside a building. The lamellae themselves may have various shapes, dimensions and may be made from a wide range of materials. Photovoltaic lamellae of a brise soleil system include several layers placed atop one another.

The first layer is the transparent front layer protecting the product against scratching, impact and chemicals. The second layer is a transparent adhesive, which may be a melted adhesive, a pressure-sensitive adhesive or a resin, or a double-sided adhesive tape. The third layer is a photovoltaic cell or a module absorbing light and generating electricity. Various photovoltaic cell technologies and various colours may be used. The fourth layer is an adhesive, which may be a melted adhesive, a pressure-sensitive adhesive or a resin, or a double-sided adhesive tape. This layer is provided with a small opening, which enables electric wires to be connected to photovoltaic modules, for example by soldering. The last layer is a layer of material the lamella is made of. The lamella may be made of various materials, such as aluminium, plastic, steel, glass, ceramics or wood. The lamella may have any shape appropriate for the design of the photovoltaic brise soleil system. It is usually formed as a longitudinal panel or an elongated, open profile with a cross-section resembling an elongated letter C. It may also be shaped as a longitudinal, closed, hollow profile with a square, rectangular or oval cross-section or with a cross-section in the form of two longitudinal letter C connected at their ends (a lens cross-section). The electric wires of the photovoltaic module are hidden inside the lamella core, which is provided with a small opening enabling access to the photovoltaic module. The lamella may be placed horizontally or vertically inside the photovoltaic brise soleil system and may be fixed or movable, controlled manually or automatically. In the case of automatic control, the photovoltaic brise soleil is provided with driving elements connected with a source of information used to determine the lamella position. The drive allows lamella tilt to be adjusted, adapting to the position of the Sun, for example, thus maximising the power generated by the photovoltaic modules. The sources of information may include sensors of temperature, light intensity, wind or moisture level, installed on/in the brise soleil system or on the building wall. The drive elements may also be connected to external weather data sources (weather stations), data sources providing information about the day time, season and which may be operated by the user, for example using wireless technologies and the relevant applications installed on the devices (mobile phones, tablets or computers).

The subjects of the invention are explained using embodiments of the invention presented in the drawing, in which
Fig. 1 presents an embodiment of the photovoltaic brise soleil system according to the invention,
Fig. 2 presents a top view of an embodiment of a lamella according to the invention (without the photovoltaic layer);
Fig. 3 presents a cross-section through an embodiment of a lamella according to the invention (without the photovoltaic layer);
Fig. 4 presents a perspective view of an embodiment of a photovoltaic lamella according to the invention;
Fig. 5 presents the connection diagram for connection between photovoltaic modules within the photovoltaic layers installed on a photovoltaic lamella according to the invention;
Fig. 6 and 7 present the layout of layers within the photovoltaic lamella according to the invention.
Fig. 8 presents an example lamella with a depression in its profile.
Fig. 9 presents an example lamella with the insulation material present inside the lamella.
Fig. 10 presents an example layout of photovoltaic modules on the surface of the lamella.
Fig. 11 presents an example lamella, in which the adhesive layer contains a reflecting element.
Fig. 12 presents an example lamella, in which the adhesive layer contains a pigment.

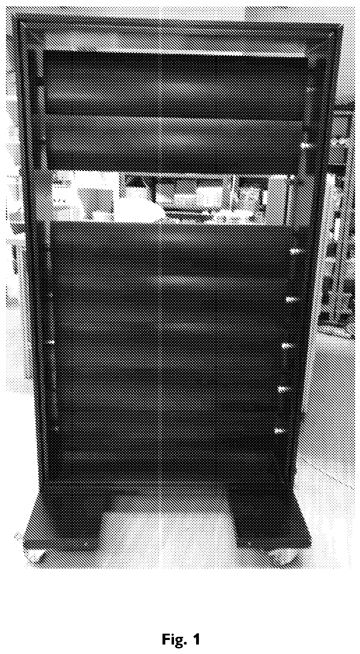

Fig. 1 presents an embodiment of a photovoltaic brise soleil according to the invention, in the form of a ready device containing 8 lamellae (one lamella was removed). The device presented as an example contains empty lamellae, not yet coated with a photovoltaic layer. The photovoltaic brise soleil system contains a frame and a drive element moving the photovoltaic lamellae, such that they rotate around the longitudinal axis of the lamella, following the angle of incidence of the sunlight, as well as a controlling element. In a preferable embodiment of the invention, the drive element and the controlling element are supplied using electricity obtained from the photovoltaic modules. The controlling element may be equipped with communication interfaces, such as a GPS receiver, a GSM receiver/transmitter, Bluetooth and/or Wi-Fi. The communication interfaces enable communication between the photovoltaic brise soleil system and external sources of information, such as a weather station.

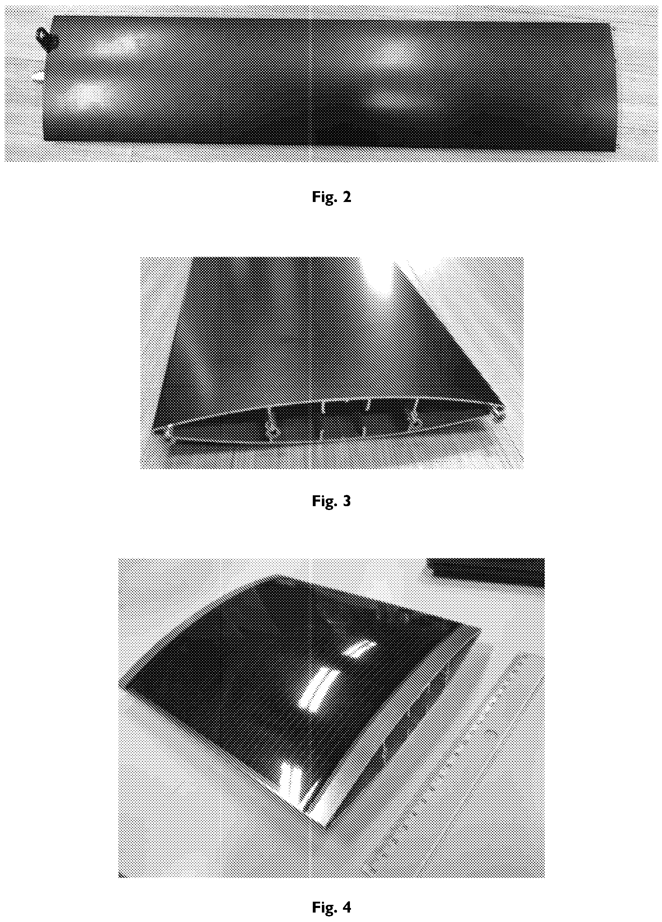

Fig. 2 presents a top view of an embodiment of a lamella according to the invention, without the photovoltaic layer, and Fig. 3 presents a cross-section view, also without the photovoltaic layer.

Fig. 4 presents a part of the photovoltaic lamella coated with the photovoltaic layer according to the invention.

As shown in Fig. 1-4, photovoltaic lamellae were made of aluminium, for example, in the form of a closed aluminium profile with a lens cross-section. The closed profile is hollow, such that electric wires (10) may be hidden inside the profile.

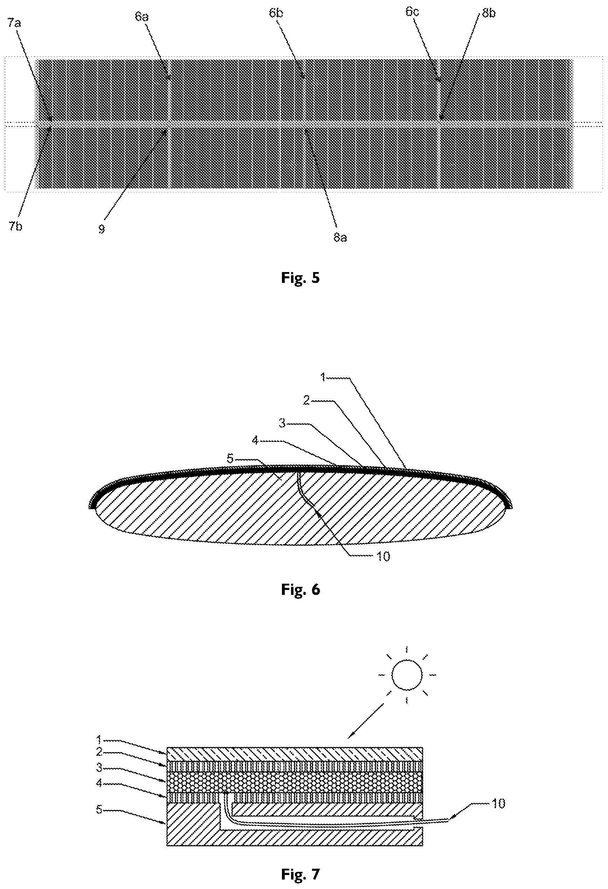

The photovoltaic layer (3) has been attached to one side of the lamella, using double-sided adhesive tape. Adhesive tape (4) was placed on the surface of the aluminium layer (5) used to make the lamella, and a single opening (9) was made in the aluminium layer (5) and the adhesive tape (4), passing through said layers, enabling electric wires (10) to be routed to the busbars (7a, 7b). A photovoltaic layer (3) is present on the adhesive tape (4), comprised of four connected photovoltaic modules with the dimensions of 10x20 cm. The photovoltaic layer (3) is coated with another adhesive layer (2) in the form of a double-sided tape, thanks to which the transparent protective layer (1) was attached to the photovoltaic layer (3). As shown in Fig. 5, four photovoltaic modules are placed next to one another and connected mechanically and electrically via the same poles, using a busbar (6a, 6b, 6c) and subsequently laminated. The photovoltaic layer (3) on the bottom, or at the side adjacent to the adhesive tape (4), was provided with two other, closely placed busbars (7a, 7b) perpendicular to the busbars (6a, 6b, 6c). Positive module outputs (8a) in the photovoltaic layer (3) are electrically connected to the first busbar (7a), and negative module outputs (8b) are electrically connected to the second busbar (7b), while electric wires (10) are connected to the busbars (7a, 7b) at the connection point between the busbar (7b) and the busbar (6a). Photovoltaic lamellae were connected to a battery and a power inverter to supply the motor moving the lamellae.

Because of the parallel connection between the photovoltaic modules used, in the case of damage to one photovoltaic module it is not necessary to replace the entire device or the damaged lamella immediately because of the sudden drop in energy generation efficiency. Additionally, thanks to the use of the module connection method according to the invention, a uniform, flat connection between the photovoltaic layer and the lamella is achieved. Thanks to this solution, the lamella production process is also simplified, as it does not require multiple openings to be made in the lamella (lamella profile), as a single opening is enough for routing the electric wires. The photovoltaic layer additionally retains integrity thanks to the adhesive used to join the photovoltaic layer with the lamella and with the protective layer.

Power in the range between 50 and 180 W/m² was achieved for this device, for the optimal position of the lamella towards the Sun.

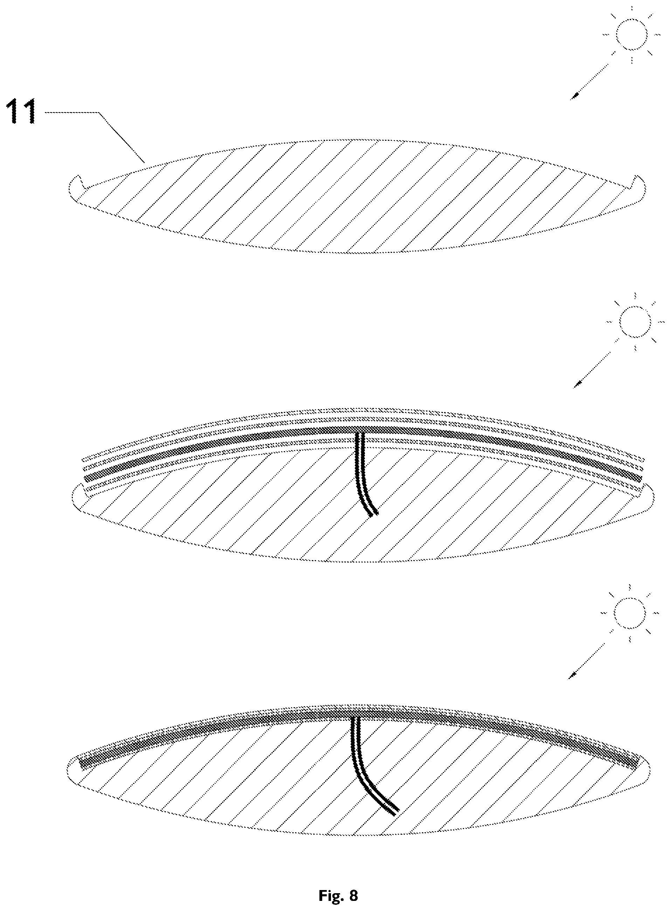

Other embodiments of the invention are presented in Fig. 8-12.

Thus, Fig. 8 presents an example lamella with a depression (11) in the profile, intended for placing a photovoltaic module in it. The special depression (11) in the lamella profile was designed such that it enables photovoltaic modules to be placed in the depression in such a way that the total thickness of the modules is generally equal to the depression depth. This solution ensures protection against scratching of the film surface and possible peeling of the photovoltaic module from the lamella, prevents water accumulation at the edges, at the same time providing an aesthetic effect, as the entire photovoltaic module is hidden within the depression.

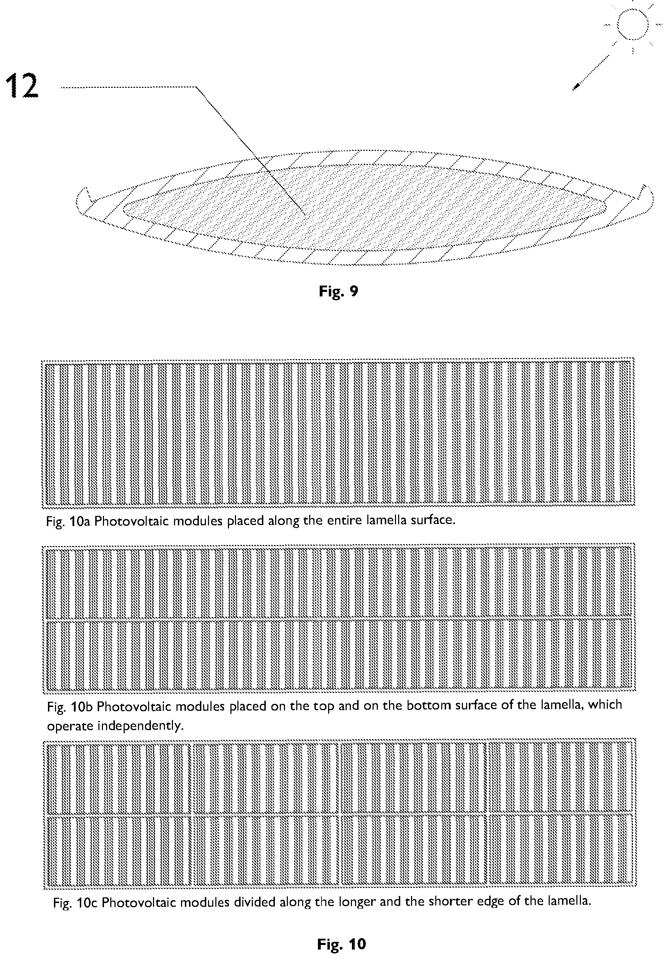

Fig. 9 presents an example lamella containing insulating material inside. The hollow lamella may be used to place insulation material inside, completely filling the inside of the lamella. Brise soleil systems with a filling may act as a building insulation with the lamellae in their closed position. Insulation materials providing thermal insulation, soundproofing or electromagnetic insulation may be used in this case.

Photovoltaic modules may also be connected such that they can operate independently. Fig. 10 presents an example layout of photovoltaic modules on the surface of the lamella. Fig. 10a presents the photovoltaic modules placed along the entire lamella surface. Fig. 10b presents the photovoltaic modules placed on the top and on the bottom surface of the lamella, which operate independently. Fig. 10c, on the other hand, shows the photovoltaic modules divided along the longer and the shorter edge of the lamella.

Connections according to Fig. 10b ensure that modules remaining in the shade have no negative impact on the operation of the other modules. The top or the bottom part of the lamella may be shaded. Such shading may be caused directly by the lamella located above. It is thus preferred for modules present on the top part of the lamella to operate independently of modules located on the bottom part of the lamella.

Individual areas of the lamella along its longer edge may be additionally shaded. In this case, a connection according to Fig. 10c may be used, where several modules are present on the top or on the bottom part of the lamella, operating independently.

The division of photovoltaic modules on a single lamella increases operational efficiency of the device and ensures more flexible use, adapted to the specific working conditions of the device.

If the divided modules are located along the longer and the shorter edge of the lamella according to Fig. 10c, two sections may be distinguished.

Modules located on the top of the lamella are electrically connected together in a series or in parallel, depending on the current and voltage required. This system forms the first section. The second section is electrically connected in the same way as the first section, but includes only modules located at the bottom of the lamella. Thus, two independent sections are obtained which may be connected to the same load using a "bypass diode". They can also be connected independently, to two independent loading channels.

In this solution, all top sections in each lamella present within the system are connected together and all bottom sections in each lamella present within the system are separately connected together. This is intended to minimise the influence of the top section shading by the adjacent lamellae on the efficiency of the entire system.

Two sections shall be present, similar to the configuration according to Fig. 10b. The exception is that individual modules on the top and on the bottom part of the lamella are not electrically connected.

The modules may be produced during a single process. It is possible to produce modules with such dimensions that the modules cover the entire surface area of the lamella, depending on the configuration (Fig. 10a, b, c). The single stage module production process makes production significantly shorter, and the subsequent installation on the lamella is also shorter.

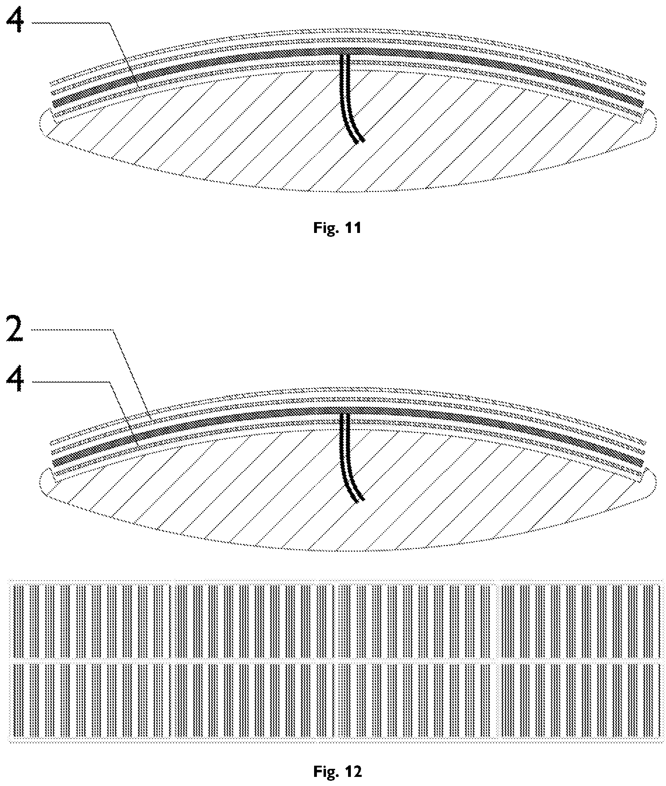

Lamellae according to the invention may also include various additives within the adhesive layer. Fig. 11 presents an example lamella, in which the adhesive layer (4) contains a reflecting element. The adhesive layer (4) located below the photovoltaic layer (3) contains a reflecting element enabling the operational efficiency of the photovoltaic module to be improved. Light, which is not initially absorbed by the photovoltaic layer shall be reflected by the reflecting element and shall return to the photovoltaic layer, where it is absorbed and used. The reflecting element, for example in the form of a reflecting coating, may also be applied onto the layer of the material (5) the lamella is made of. In this case, the reflecting layer may be made of metals, metal oxides or other materials ensuring formation of a reflecting coating.

Fig. 12 presents an example lamella, in which the adhesive layer contains a pigment. The top adhesive layer (2) contains a pigment, which improves aesthetic properties of the given system and enables colour selection for the specific project. On the other hand, the bottom adhesive layer (4) forms a continuous substrate, on which individual modules are placed. Pigment ensuring the impression of continuity may be present in this layer, such that gaps between individual modules are not visible.

## Claims

1. A photovoltaic lamella with the shape of a longitudinal closed profile or a closed panel, containing at least two photovoltaic modules on one side, wherein electric conductors (10) from the photovoltaic module are placed inside the lamella, **characterised in that** it includes several layers on at least one side, placed atop one another, such that
- a bottom adhesive layer (4) is applied onto the surface of material (5) the lamella is made of, wherein at least one through opening (9) passing through the bottom adhesive layer (4) and at least partially through the material (5) is present in the material (5) and in the bottom adhesive layer (4), which allows the electric conductors (10) to be routed to busbars (7a, 7b);
- a photovoltaic layer (3) comprised of at least two photovoltaic modules is present on the bottom adhesive layer (4);
- the photovoltaic layer (3) is covered with a top adhesive layer (2) attaching a transparent protective layer (1) to the photovoltaic layer (3), wherein at least one of the top adhesive layer (2) and the bottom adhesive layer (4) contains colour-imparting pigments, wherein the photovoltaic layer (3) contains:
- at least two photovoltaic modules located next to each other and laminated,
- two adjacent busbars (7a, 7b) running between the photovoltaic layer (3) and the bottom adhesive layer (4),
- wherein the lamella has a depression (11) in the profile, enabling photovoltaic modules to be placed therein, such that the total module thickness is generally equal to the depth of the depression, and the whole area of the front surface of the solar modules is exposed to light.

2. A photovoltaic lamella according to Claim 1, **characterised in that** the photovoltaic layer (3) contains:
- at least two photovoltaic modules placed next to each other, connected mechanically and electrically using a busbar (6a, 6b, 6c) and laminated,
- two other adjacent busbars (7a, 7b) generally perpendicular to the busbars (6a, 6b, 6c) running between the photovoltaic layer (3) and the bottom adhesive layer (4),
- wherein positive outputs of the modules (8a) are connected electrically to the first busbar (7a), and negative outputs of the modules (8b) are connected electrically to the second busbar (7b),
- while electric conductors (10) are connected to busbars (7a, 7b), preferably at the junctions of any of the busbars (7a, 7b) with any other busbar (6a, 6b, 6c).

3. A photovoltaic lamella according to Claim 1 or 2, **characterised in that** the longitudinal closed profile is hollow.

4. A photovoltaic lamella according to Claim 1, 2 or 3, **characterised in that** the longitudinal, closed profile has a rectangular cross-section or an oval cross-section or a cross-section in the form of two elongated C letters connected at their ends (a lens cross-section).

5. A photovoltaic lamella according to Claim 1, **characterised in that** the longitudinal panel is flat or convex.

6. A photovoltaic lamella according to any of the Claims 1-5, **characterised in that** it is made of materials, such as aluminium, plastic, steel, glass, ceramics or wood.

7. A photovoltaic lamella according to any of the Claims 1-6, **characterised in that** the top adhesive layer (2) and the bottom adhesive layer (4) contain adhesive, such as melting adhesive, pressure-sensitive adhesive (PSA), resin or double-sided adhesive tape.

8. A photovoltaic lamella according to any of the Claims 1-7, **characterised in that** the photovoltaic layer (3) contains photovoltaic modules made using silicon, perovskite, organic OPV or CIGS (copper, indium, gallium and selenide) technology.

9. A photovoltaic lamella according to any of the Claims 1-8, **characterised in that** it is additionally filled inside with an insulating material.

10. A photovoltaic lamella according to any of the Claims 1-9, **characterised in that** at least two photovoltaic modules operate independently of each other.

11. A photovoltaic lamella according to any of the Claims 1-10, **characterised in that** it additionally contains a reflecting element in the bottom adhesive layer (4) or the reflective element is formed as a reflecting layer applied onto the surface of the material (5) the lamella is made of.

12. A production method of a photovoltaic lamella defined in any of the Claims 1-11, **characterised in that** it includes the following stages, during which
a) the photovoltaic layer (3) is produced in the following stages, in which
- at least two photovoltaic modules are placed next to each other and subsequently laminated,
- two neighbouring busbars (7a, 7b) are placed on one side of the laminated photovoltaic modules, which extend between the photovoltaic layer (3) and the bottom adhesive layer (4) in the photovoltaic lamella,
b) the bottom adhesive layer (4) is applied onto at least one side of the lamella, which is in the shape of a longitudinal, closed profile or a longitudinal panel, onto the surface of the material (5) the photovoltaic lamella is made of, and subsequently at least one through opening (9) is made through the bottom adhesive layer (4) and at least partially through material (5), which enables routing of electric conductors (10) to the busbars (7a, 7b);
c) a photovoltaic layer (3) comprised of at least two photovoltaic modules is applied onto the bottom adhesive layer (4);
d) the photovoltaic layer (3) is covered with a top adhesive layer (2) and a transparent protective layer (1) is applied onto the photovoltaic layer (3), by attaching it to the top adhesive layer (2); wherein at least one of the top adhesive layer (2) and the bottom adhesive layer (4) contains colour-imparting pigments;
wherein stages a) and b) may be performed in any order, while stages c) and d) may be performed in any order, but only after stage a).

13. A method according to Claim 12, **characterised in that** it includes the following stages, during which
a) the photovoltaic layer (3) is produced in the following stages, in which
- at least two photovoltaic modules are placed next to each other and connected mechanically and electrically, preferably using the same poles, using a busbar (6a, 6b, 6c) and are subsequently laminated,
- two other neighbouring busbars (7a, 7b), generally perpendicular to the busbars (6a, 6b, 6c) which extend between the photovoltaic layer (3) and the bottom adhesive layer (4) in the photovoltaic lamella, are placed on one side of the connected and laminated photovoltaic modules,
wherein positive outputs of the modules are connected electrically to the first busbar (7a) and negative outputs of the modules are connected electrically to the second busbar (7b),
while electric conductors are connected to busbars (7a, 7b), preferably at the junctions of any of the busbars (7a, 7b) with any other busbar (6a, 6b, 6c);
b) the bottom adhesive layer (4) is applied onto at least one side of the lamella, which is in the shape of a longitudinal, closed profile or a longitudinal panel, onto the surface of the material (5) the photovoltaic lamella is made of, and subsequently at least one through opening (9) is made through the bottom adhesive layer (4) and at least partially through material (5), which enables routing of electric conductors (10) to the busbars (7a, 7b);
c) a photovoltaic layer (3) comprised of at least two connected, preferably in parallel, photovoltaic modules is applied onto the bottom adhesive layer (4);
d) the photovoltaic layer (3) is covered with a top adhesive layer (2) and a transparent protective layer (1) is applied onto the photovoltaic layer (3), by attaching it to the top adhesive layer (2); wherein the top adhesive layer (2) and the bottom adhesive layer (4) contain colour-imparting pigments;
wherein stages a) and b) may be performed in any order, while stages c) and d) may be performed in any order, but only after stage a).

14. A production method of a photovoltaic lamella according to Claim 12 or 13, **characterised in that** the bottom adhesive layer (4) and the photovoltaic layer (3) are applied onto both sides of the lamella during stages b) and c), wherein the photovoltaic layers (3) on both sides of the lamella may be different, with a photovoltaic layer (3a) on one side and a photovoltaic layer (3b) on the other side.

15. A photovoltaic brise soleil system including:
- a frame,
- means for moving at least one photovoltaic lamella,
- controlling means,
- **characterised in that** the at least one photovoltaic lamella is the photovoltaic lamella according to any of claims 1-11.

## Patentansprüche

1. Photovoltaiklamelle in Form eines länglichen, geschlossenen Profils oder eines geschlossenen Panels, die auf einer Seite mindestens zwei Photovoltaikmodule aufweist, wobei elektrische Leiter (10) von dem Photovoltaikmodule innerhalb der Lamelle angeordnet sind, **dadurch gekennzeichnet, dass** sie auf mindestens einer Seite mehrere übereinander angeordnete Schichten umfasst, so dass
- eine untere Klebeschicht (4) auf die Oberfläche des Materials (5) aufgebracht ist, aus dem die Lamelle besteht, wobei in dem Material (5) und in der unteren Klebeschicht (4) mindestens eine Durchgangsöffnung (9) vorgesehen ist, die durch die untere Klebeschicht (4) und mindestens teilweise durch das Material (5) verläuft und die Führung der elektrischen Leiter (10) zu Sammelschienen (7a, 7b) ermöglicht;
- auf der unteren Klebeschicht (4) eine Photovoltaikschicht (3) angeordnet ist, die aus mindestens zwei Photovoltaikmodulen besteht;
- die Photovoltaikschicht (3) von einer oberen Klebeschicht (2) bedeckt ist, welche eine transparente Schutzschicht (1) an der Photovoltaikschicht (3) befestigt, wobei mindestens eine der oberen Klebeschicht (2) und der unteren Klebeschicht (4) farbgebende Pigmente enthält,
- wobei die Photovoltaikschicht (3) aufweist:
- mindestens zwei nebeneinander angeordnete und laminierte Photovoltaikmodule;
- zwei benachbarte Sammelschienen (7a, 7b), die zwischen der Photovoltaikschicht (3) und der unteren Klebeschicht (4) verlaufen;
- wobei die Lamelle eine Vertiefung (11) im Profil aufweist, die es ermöglicht, Photovoltaikmodule darin so anzuordnen, dass die Gesamtmoduldicke im Wesentlichen der Tiefe der Vertiefung entspricht und die gesamte Fläche der Vorderseite der Solarmodule dem Licht ausgesetzt ist.

2. Photovoltaiklamelle nach Anspruch 1, **dadurch gekennzeichnet, dass** die Photovoltaikschicht (3) umfasst:
- mindestens zwei nebeneinander angeordnete Photovoltaikmodule, die mechanisch und elektrisch mittels einer Sammelschiene (6a, 6b, 6c) verbunden und laminiert sind;
- zwei weitere benachbarte Sammelschienen (7a, 7b), die im Allgemeinen senkrecht zu den Sammelschienen (6a, 6b, 6c) verlaufen und zwischen der Photovoltaikschicht (3) und der unteren Klebeschicht (4) angeordnet sind;
- wobei die positiven Ausgänge der Module (8a) elektrisch mit der ersten Sammelschiene (7a) und die negativen Ausgänge der Module (8b) elektrisch mit der zweiten Sammelschiene (7b) verbunden sind;
- und wobei die elektrischen Leiter (10) mit den Sammelschienen (7a, 7b) verbunden sind, vorzugsweise an den Verbindungsstellen einer der Sammelschienen (7a, 7b) mit einer anderen Sammelschiene (6a, 6b, 6c).

3. Photovoltaiklamelle nach Anspruch 1 oder 2, **dadurch gekennzeichnet, dass** das längliche, geschlossene Profil hohl ausgebildet ist.

4. Photovoltaiklamelle nach Anspruch 1, 2 oder 3, **dadurch gekennzeichnet, dass** das längliche, geschlossene Profil einen rechteckigen Querschnitt oder einen ovalen Querschnitt oder einen Querschnitt in Form zweier länglicher C- Buchstaben aufweist, die an ihren Enden miteinander verbunden sind (Linsenquerschnitt).

5. Photovoltaiklamelle nach Anspruch 1, **dadurch gekennzeichnet, dass** das längliche Panel flach oder konvex ausgebildet ist.

6. Photovoltaiklamelle nach einem der Ansprüche 1 bis 5, **dadurch gekennzeichnet, dass** sie aus Materialien wie Aluminium, Kunststoff, Stahl, Glas, Keramik oder Holz hergestellt ist.

7. Photovoltaiklamelle nach einem der Ansprüche 1 bis 6, **dadurch gekennzeichnet, dass** die obere Klebeschicht (2) und die untere Klebeschicht (4) einen Klebstoff enthalten, ausgewählt aus Schmelzklebstoff, druckempfindlichem Klebstoff (PSA), Harz oder doppelseitigem Klebeband.

8. Photovoltaiklamelle nach einem der Ansprüche 1 bis 7, **dadurch gekennzeichnet, dass** die Photovoltaikschicht (3) Photovoltaikmodule enthält, die unter Verwendung von Silizium-, Perowskit-, organischer OPV- oder CIGS-Technologie (Kupfer-Indium-Gallium-Selenid) hergestellt sind.

9. Photovoltaiklamelle nach einem der Ansprüche 1 bis 8, **dadurch gekennzeichnet, dass** sie zusätzlich innen mit einem Isoliermaterial gefüllt ist.

10. Photovoltaiklamelle nach einem der Ansprüche 1 bis 9, **dadurch gekennzeichnet, dass** mindestens zwei Photovoltaikmodule unabhängig voneinander arbeiten.

11. Photovoltaiklamelle nach einem der Ansprüche 1 bis 10, **dadurch gekennzeichnet, dass** sie zusätzlich ein reflektierendes Element in der unteren Klebeschicht (4) enthält oder dass das reflektierende Element als eine auf die Oberfläche des Materials (5), aus dem die Lamelle besteht, aufgebrachte reflektierende Schicht ausgebildet ist.

12. Verfahren zur Herstellung einer Photovoltaiklamelle nach einem der Ansprüche 1 bis 11, **dadurch gekennzeichnet, dass** es folgende Schritte umfasst:
a) Herstellen der Photovoltaikschicht (3), wobei
- mindestens zwei Photovoltaikmodule nebeneinander angeordnet und anschließend laminiert werden;
- zwei benachbarte Sammelschienen (7a, 7b) auf einer Seite der laminierten Photovoltaikmodule angeordnet werden, welche sich in der Photovoltaiklamelle zwischen der Photovoltaikschicht (3) und der unteren Klebeschicht (4) erstrecken;
b) Aufbringen der unteren Klebeschicht (4) auf mindestens eine Seite der Lamelle, die die Form eines länglichen, geschlossenen Profils oder eines länglichen Panels aufweist, auf die Oberfläche des Materials (5), aus dem die Photovoltaiklamelle besteht, und anschließendes Herstellen mindestens einer Durchgangsöffnung (9) durch die untere Klebeschicht (4) und mindestens teilweise durch das Material (5), wodurch die Führung elektrischer Leiter (10) zu den Sammelschienen (7a, 7b) ermöglicht wird;
c) Aufbringen einer Photovoltaikschicht (3), die aus mindestens zwei Photovoltaikmodulen besteht, auf die untere Klebeschicht (4);
d) Bedecken der Photovoltaikschicht (3) mit einer oberen Klebeschicht (2) und Aufbringen einer transparenten Schutzschicht (1) auf die Photovoltaikschicht (3) durch Befestigung an der oberen Klebeschicht (2); wobei mindestens eine der oberen Klebeschicht (2) und der unteren Klebeschicht (4) farbgebende Pigmente enthält;
wobei die Schritte a) und b) in beliebiger Reihenfolge durchgeführt werden können, während die Schritte c) und d) in beliebiger Reihenfolge, jedoch erst nach Schritt a) durchgeführt werden können.

13. Verfahren nach Anspruch 12, **dadurch gekennzeichnet, dass** es folgende Schritte umfasst:
a) Herstellen der Photovoltaikschicht (3), wobei
- mindestens zwei Photovoltaikmodule nebeneinander angeordnet und mechanisch und elektrisch, vorzugsweise unter Verwendung derselben Pole, mittels einer Sammelschiene (6a, 6b, 6c) verbunden und anschließend laminiert werden;
- zwei weitere benachbarte Sammelschienen (7a, 7b), die im Allgemeinen senkrecht zu den Sammelschienen (6a, 6b, 6c) verlaufen und sich in der Photovoltaiklamelle zwischen der Photovoltaikschicht (3) und der unteren Klebeschicht (4) erstrecken, auf einer Seite der verbundenen und laminierten Photovoltaikmodule angeordnet werden;
wobei die positiven Ausgänge der Module elektrisch mit der ersten Sammelschiene (7a) und die negativen Ausgänge der Module elektrisch mit der zweiten Sammelschiene (7b) verbunden sind,
wobei elektrische Leiter mit den Sammelschienen (7a, 7b) verbunden werden, vorzugsweise an den Verbindungsstellen einer der Sammelschienen (7a, 7b) mit einer anderen Sammelschiene (6a, 6b, 6c);
b) Aufbringen der unteren Klebeschicht (4) auf mindestens eine Seite der Lamelle, die die Form eines länglichen, geschlossenen Profils oder eines länglichen Panels aufweist, auf die Oberfläche des Materials (5), aus dem die Photovoltaiklamelle besteht, und anschließendes Herstellen mindestens einer Durchgangsöffnung (9) durch die untere Klebeschicht (4) und mindestens teilweise durch das Material (5), wodurch die Führung elektrischer Leiter (10) zu den Sammelschienen (7a, 7b) ermöglicht wird;
c) Aufbringen einer Photovoltaikschicht (3), die aus mindestens zwei verbundenen, vorzugsweise parallel geschalteten, Photovoltaikmodulen besteht, auf die untere Klebeschicht (4);
d) Bedecken der Photovoltaikschicht (3) mit einer oberen Klebeschicht (2) und Aufbringen einer transparenten Schutzschicht (1) auf die Photovoltaikschicht (3) durch Befestigung an der oberen Klebeschicht (2); wobei die obere Klebeschicht (2) und die untere Klebeschicht (4) farbgebende Pigmente enthalten;
wobei die Schritte a) und b) in beliebiger Reihenfolge durchgeführt werden können, während die Schritte c) und d) in beliebiger Reihenfolge, jedoch erst nach Schritt a) durchgeführt werden können.

14. Verfahren zur Herstellung einer Photovoltaiklamelle nach Anspruch 12 oder 13, **dadurch gekennzeichnet, dass** die untere Klebeschicht (4) und die Photovoltaikschicht (3) während der Schritte b) und c) auf beide Seiten der Lamelle aufgebracht werden, wobei die Photovoltaikschichten (3) auf beiden Seiten der Lamelle unterschiedlich sein können, mit einer Photovoltaikschicht (3a) auf der einen Seite und einer Photovoltaikschicht (3b) auf der anderen Seite.

15. Photovoltaik-Brise-Soleil-System, umfassend:
- einen Rahmen;
- Mittel zum Bewegen mindestens einer Photovoltaiklamelle;
- Steuermittel;
**dadurch gekennzeichnet, dass** die mindestens eine Photovoltaiklamelle eine Photovoltaiklamelle nach einem der Ansprüche 1 bis 11 ist.

## Revendications

1. Lamelle photovoltaïque ayant la forme d'un profilé longitudinal fermé ou d'un panneau fermé, contenant au moins deux modules photovoltaïques sur un côté, dans laquelle des conducteurs électriques (10) provenant du module photovoltaïque sont disposés à l'intérieur de la lamelle, **caractérisée en ce qu'**elle comprend, sur au moins un côté, plusieurs couches superposées, de telle sorte que :
- une couche adhésive inférieure (4) est appliquée sur la surface du matériau (5) constituant la lamelle, au moins une ouverture traversante (9) passant à travers la couche adhésive inférieure (4) et au moins partiellement à travers le matériau (5) étant présente dans le matériau (5) et dans la couche adhésive inférieure (4), ce qui permet d'acheminer les conducteurs électriques (10) vers des barres omnibus (7a, 7b) ;
- une couche photovoltaïque (3) composée d'au moins deux modules photovoltaïques est présente sur la couche adhésive inférieure (4) ;
- la couche photovoltaïque (3) est recouverte d'une couche adhésive supérieure (2) fixant une couche protectrice transparente (1) à la couche photovoltaïque (3), au moins l'une des couches adhésives supérieure (2) et inférieure (4) contenant des pigments conférant une coloration, la couche photovoltaïque (3) contenant :
- au moins deux modules photovoltaïques disposés côte à côte et laminés,
- deux barres omnibus adjacentes (7a, 7b) s'étendant entre la couche photovoltaïque (3) et la couche adhésive inférieure (4),
- la lamelle présentant une dépression (11) dans le profil, permettant de loger les modules photovoltaïques, de telle sorte que l'épaisseur totale du module soit sensiblement égale à la profondeur de la dépression, et que la totalité de la face avant des modules solaires soit exposée à la lumière.

2. Lamelle photovoltaïque selon la revendication 1, **caractérisée en ce que** la couche photovoltaïque (3) comprend :
- au moins deux modules photovoltaïques disposés côte à côte, reliés mécaniquement et électriquement au moyen d'une barre omnibus (6a, 6b, 6c) et laminés,
- deux autres barres omnibus adjacentes (7a, 7b) s'étendant entre la couche photovoltaïque (3) et la couche adhésive inférieure (4) et généralement perpendiculaires aux barres omnibus (6a, 6b, 6c),
- les sorties positives des modules (8a) étant connectées électriquement à la première barre omnibus (7a) et les sorties négatives des modules (8b) étant connectées électriquement à la seconde barre omnibus (7b),
- des conducteurs électriques (10) étant connectés aux barres omnibus (7a, 7b), de préférence au niveau des jonctions de l'une quelconque des barres omnibus (7a, 7b) avec l'une quelconque des autres barres omnibus (6a, 6b, 6c).

3. Lamelle photovoltaïque selon la revendication 1 ou 2, **caractérisée en ce que** le profilé longitudinal fermé est creux.

4. Lamelle photovoltaïque selon l'une quelconque des revendications 1 à 3, **caractérisée en ce que** le profilé longitudinal fermé présente une section transversale rectangulaire ou ovale, ou une section transversale en forme de deux lettres C allongées reliées à leurs extrémités (section transversale en lentille).

5. Lamelle photovoltaïque selon la revendication 1, **caractérisée en ce que** le panneau longitudinal est plat ou convexe.

6. Lamelle photovoltaïque selon l'une quelconque des revendications 1 à 5, **caractérisée en ce qu'**elle est réalisée en un matériau choisi parmi l'aluminium, le plastique, l'acier, le verre, la céramique ou le bois.

7. Lamelle photovoltaïque selon l'une quelconque des revendications 1 à 6, **caractérisée en ce que** la couche adhésive supérieure (2) et la couche adhésive inférieure (4) contiennent un adhésif, tel qu'un adhésif thermofusible, un adhésif sensible à la pression (PSA), une résine ou un ruban adhésif double face.

8. Lamelle photovoltaïque selon l'une quelconque des revendications 1 à 7, **caractérisée en ce que** la couche photovoltaïque (3) comprend des modules photovoltaïques réalisés selon une technologie au silicium, à la pérovskite, à l'OPV organique ou de type CIGS (cuivreindium-gallium-séléniure).

9. Lamelle photovoltaïque selon l'une quelconque des revendications 1 à 8, **caractérisée en ce qu'**elle est en outre remplie intérieurement avec un matériau isolant.

10. Lamelle photovoltaïque selon l'une quelconque des revendications 1 à 9, **caractérisée en ce qu'**au moins deux modules photovoltaïques fonctionnent indépendamment l'un de l'autre.

11. Lamelle photovoltaïque selon l'une quelconque des revendications 1 à 10, **caractérisée en ce qu'**elle comprend en outre un élément réfléchissant dans la couche adhésive inférieure (4) ou **en ce que** l'élément réfléchissant est formé par une couche réfléchissante appliquée sur la surface du matériau (5) constituant la lamelle.

12. Procédé de fabrication d'une lamelle photovoltaïque telle que définie dans l'une quelconque des revendications 1 à 11, **caractérisé en ce qu'**il comprend les étapes suivantes, au cours desquelles :
a) la couche photovoltaïque (3) est produite selon les étapes suivantes :
- au moins deux modules photovoltaïques sont disposés côte à côte puis laminés,
- deux barres omnibus voisines (7a, 7b) sont placées sur une face des modules photovoltaïques laminés, lesquelles s'étendent entre la couche photovoltaïque (3) et la couche adhésive inférieure (4) dans la lamelle photovoltaïque ;
b) la couche adhésive inférieure (4) est appliquée sur au moins un côté de la lamelle, la lamelle ayant la forme d'un profilé longitudinal fermé ou d'un panneau longitudinal, sur la surface du matériau (5) constituant la lamelle photovoltaïque, puis au moins une ouverture traversante (9) est réalisée à travers la couche adhésive inférieure (4) et au moins partiellement à travers le matériau (5), ce qui permet l'acheminement des conducteurs électriques (10) vers les barres omnibus (7a, 7b) ;
c) une couche photovoltaïque (3) composée d'au moins deux modules photovoltaïques est appliquée sur la couche adhésive inférieure (4) ;
d) la couche photovoltaïque (3) est recouverte d'une couche adhésive supérieure (2) et une couche protectrice transparente (1) est appliquée sur la couche photovoltaïque (3), en la fixant à la couche adhésive supérieure (2), au moins l'une des couches adhésives supérieure (2) et inférieure (4) contenant des pigments conférant une coloration ;
les étapes a) et b) pouvant être réalisées dans n'importe quel ordre, tandis que les étapes c) et d) peuvent être réalisées dans n'importe quel ordre, mais uniquement après l'étape a).

13. Procédé selon la revendication 12, **caractérisé en ce qu'**il comprend les étapes suivantes, au cours desquelles :
a) la couche photovoltaïque (3) est produite selon les étapes suivantes :
- au moins deux modules photovoltaïques sont disposés côte à côte et connectés mécaniquement et électriquement, de préférence en utilisant les mêmes pôles, au moyen d'une barre omnibus (6a, 6b, 6c), puis sont laminés ;
- deux autres barres omnibus voisines (7a, 7b), généralement perpendiculaires aux barres omnibus (6a, 6b, 6c), sont placées sur une face des modules photovoltaïques connectés et laminés, lesdites barres omnibus (7a, 7b) s'étendant entre la couche photovoltaïque (3) et la couche adhésive inférieure (4) dans la lamelle photovoltaïque ;
les sorties positives des modules sont connectées électriquement à la première barre omnibus (7a) et les sorties négatives des modules sont connectées électriquement à la seconde barre omnibus (7b), tandis que des conducteurs électriques sont connectés aux barres omnibus (7a, 7b), de préférence au niveau des jonctions de l'une quelconque des barres omnibus (7a, 7b) avec l'une quelconque des autres barres omnibus (6a, 6b, 6c) ;
b) la couche adhésive inférieure (4) est appliquée sur au moins un côté de la lamelle, la lamelle ayant la forme d'un profilé longitudinal fermé ou d'un panneau longitudinal, sur la surface du matériau (5) constituant la lamelle photovoltaïque, puis au moins une ouverture traversante (9) est réalisée à travers la couche adhésive inférieure (4) et au moins partiellement à travers le matériau (5), ce qui permet l'acheminement des conducteurs électriques (10) vers les barres omnibus (7a, 7b) ;
c) une couche photovoltaïque (3) composée d'au moins deux modules photovoltaïques connectés, de préférence en parallèle, est appliquée sur la couche adhésive inférieure (4) ;
d) la couche photovoltaïque (3) est recouverte d'une couche adhésive supérieure (2) et une couche protectrice transparente (1) est appliquée sur la couche photovoltaïque (3), en la fixant à la couche adhésive supérieure (2), la couche adhésive supérieure (2) et la couche adhésive inférieure (4) contenant des pigments conférant une coloration ;
les étapes a) et b) pouvant être réalisées dans n'importe quel ordre, tandis que les étapes c) et d) peuvent être réalisées dans n'importe quel ordre, mais uniquement après l'étape a).

14. Procédé de fabrication d'une lamelle photovoltaïque selon la revendication 12 ou 13, **caractérisé en ce que** la couche adhésive inférieure (4) et la couche photovoltaïque (3) sont appliquées sur les deux côtés de la lamelle pendant les étapes b) et c), les couches photovoltaïques (3) présentes sur les deux côtés de la lamelle pouvant être différentes, avec une couche photovoltaïque (3a) sur un côté et une couche photovoltaïque (3b) sur l'autre côté.

15. Système de brise-soleil photovoltaïque comprenant :
- un cadre,
- des moyens de déplacement d'au moins une lamelle photovoltaïque,
- des moyens de commande,
**caractérisé en ce qu'**au moins une lamelle photovoltaïque est une lamelle photovoltaïque selon l'une quelconque des revendications 1 à 11.
